(19) Europäisches Patentamt
European Patent Office
Office européen des brevets

(11) Numéro de publication : **0 010 489**
**B1**

(12) **FASCICULE DE BREVET EUROPÉEN**

(45) Date de publication du fascicule du brevet : **09.06.82**

(51) Int. Cl.³ : **C 08 G 59/40**, C 08 L 63/00, C 08 L 39/06, C 08 L 35/00

(21) Numéro de dépôt : **79400740.1**

(22) Date de dépôt : **12.10.79**

(54) **Compositions thermodurcissables à base de prépolymère à groupement imide et de résine époxy.**

(30) Priorité : **25.10.78 FR 7830276**

(43) Date de publication de la demande : **30.04.80 (Bulletin 80/09)**

(45) Mention de la délivrance du brevet : **09.06.82 Bulletin 82/23**

(84) Etats contractants désignés : **BE CH DE FR GB IT LU NL SE**

(56) Documents cités : **DE A 2 230 887**

(73) Titulaire : **RHONE-POULENC INDUSTRIES**
**22 Avenue Montaigne**
**F-75008 Paris (FR)**

(72) Inventeur : **Cassat, Robert**
**Chemin de Crapon**
**F-69360 Ternay (FR)**
Inventeur : **Guillot, Gérard**
**19 Chemin des Bruyères**
**F-69160 Tassin-La-Demi-Lune (FR)**

(74) Mandataire : **Tavernier, Colette et al**
**RHONE POULENC RECHERCHES Service Brevets Chimie et Polymères 25, Quai Paul Doumer**
**F-92408 Courbevoie Cedex (FR)**

**EP 0 010 489 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Compositions thermodurcissables à base de prépolymère à groupement imide et de résine époxy

La présente invention a pour objet des compositions durcissables à base de prépolymères à groupements imides et de résines époxy.

On a déjà décrit (brevet belge 846.365) des compositions thermodurcissables comprenant un bismaléimide et la N-vinylpyrrolidone-2. Ces compositions peuvent être utilisées à l'état de prépolymères pour des opérations de moulage par coulée ou d'imprégnation. On a cherché par ailleurs à améliorer les propriétés des résines époxy par combinaison avec des dérivés d'un polyimide d'acide carboxylique insaturé. Ces compositions sont décrites par exemple dans les brevets français 2.045.087 et 2.076.447. Le premier document a pour objet un procédé de durcissement des résines époxy à l'aide d'un prépolymère obtenu par chauffage d'un bis-imide et d'une polyamine. Le second document cité mentionne l'association d'une résine époxy, d'un bis-imide et d'un anhydride carboxylique qui fournit après durcissement des matériaux doués de propriétés mécaniques élevées.

Le brevet allemand 2.230.887 décrit des polymères obtenus par réaction d'un oligomère à groupements imide avec une polyamine primaire, éventuellement modifiés par l'adjonction d'un monomère insaturé et/ou d'un polyester insaturé, à l'état de prépolymères ils sont utilisables comme durcisseurs des résines époxy.

Cependant, pour certaines applications, il était utile de trouver des compositions présentant à la fois une bonne stabilité à température ambiante, une plus grande fluidité à basse température que les prépolymères imides, et conduisant à des matériaux doués d'excellentes propriétés mécaniques.

Les compositions selon l'invention sont caractérisées en ce qu'elles comprennent :

A. un prépolymère obtenu par réaction de

a) un polyimide de formule

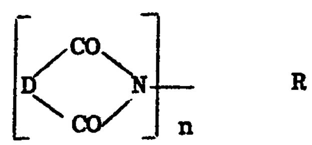

dans laquelle D représente

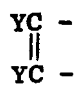

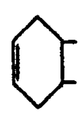

ou

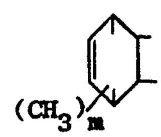

où Y représente H, $CH_3$ ou Cl et m est égal à 0,1 ou 2, R représente un radical organique de valence n, renfermant de 2 à 50 atomes de carbone, et n représente un nombre dont la valeur moyenne est comprise entre 2 et 5 ;

b) la N-vinylpyrrolidone-2 ;

c) éventuellement un polyester insaturé.

B. une résine époxy, et le cas échéant,

C. des durcisseurs pour résines époxy.

Le polyimide peut être choisi en particulier parmi les bis-imides de formule

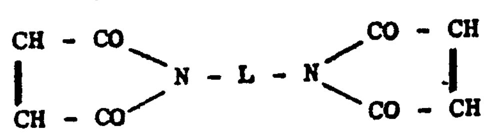

dans laquelle le symbole L représente un radical divalent choisi dans le groupe constitué par les radicaux cyclohexylène, phénylène et les radicaux de formule

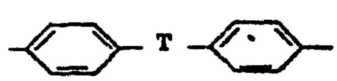

dans laquelle T représente $—CH_2—$, $C(CH_3)_2—$, —O— ou $SO_2$. Parmi les bis-maléimides correspondant aux formules et définitions données ci-avant, on donne la préférence au N,N' 4,4' diphénylméthane bismaléimide.

Le polyimide et la N-vinylpyrrolidone-2 sont utilisés en quantités telles que si $n_1$ désigne le nombre de doubles liaisons carbone-carbone apportées par le polyimide et $n_2$ le nombre de groupements $—CH = CH_2$ apportés par la N-vinylpyrrolidone-2, le rapport $n_1/n_2$ soit compris entre 1,01 et 10.

Les polyesters insaturés utilisables présentement sont des produits bien connus. Ils sont habituellement préparés par polycondensation de dérivés polycarboxyliques et de polyols ; par dérivés polycarboxyliques, on entend les acides, les esters d'alcools inférieurs, les chlorures d'acides et éventuellement les anhydrides. Parmi les monomères soumis à la polycondensation, l'un au moins contient une insaturation de type oléfinique. Dans les compositions selon l'invention, on vise essentiellement les polyesters dans lesquels les monomères insaturés de départ sont des diacides ou dianhydrides ayant une double liaison de type oléfinique en α, β. A titre d'exemple, les dérivés dicarboxyliques peuvent être du type maléique, chloromaléique, itaconique, citraconique, aconitrique, pyrocinchonique, fumarique, chlorendique, endométhylènetétrahydrophtalique, tétrahydrophtalique, éthylmaléique, succinique, sébacique, phtalique, isophtalique, adipique, hexahydrophtalique. Parmi les polyols, les plus couramment utilisés sont l'éthylène glycol, le propylène glycol, le diéthylène glycol, le triéthylène glycol, le néopentylglycol, le tétraéthylène glycol, le butylène glycol, le dipropylène glycol, le glycérol, le triméthylol-propane, le pentaérythrytol, le sorbitol, le bis (hydroxyméthyl)-3,3 cyclohexène, le tris (β-hydroxyméthyl) isocyanurate.

La préparation des polyesters insaturés peut être effectuée par application des méthodes connues (par exemple KIRK OTHMER Encyclopedia of Chemical Technology 2° edition — Vol. 20). La masse moléculaire des polyesters utilisés présentement est, en général, comprise entre 1 000 et 10 000.

L'expression « polyester insaturé » utilisé dans le présent texte désigne aussi bien les polycondensats décrits ci-avant que les solutions de ces polycondensats dans des monomères polymérisables. Les monomères liquides polymérisables peuvent être par exemple des hydrocarbures (styrène, vinyltoluène, divinylbenzène), des éthers (oxyde de vinyle et de chloro-2-éthyle), des dérivés des acides acrylique ou méthacrylique, des dérivés allyliques.

La N-vinylpyrrolidone est également connue en tant que monomère solvant de polyesters insaturés. Il doit donc être entendu que si l'on utilise un polyester insaturé celui-ci peut naturellement se trouver sous forme de solution dans un monomère polymérisable, étant admis que les prépolymères conformes à l'invention doivent toujours être préparés à partir de N-vinylpyrrolidone. Lorsqu'il est utilisé, le monomère polymérisable peut représenter de 10 à 60 % du poids de la solution de polyester insaturé. Dans les compositions, conformes à l'invention, le poids du polyester ou de la solution telle que définie ci-avant représente de préférence de 5 à 60 % du poids de l'ensemble polyimide + N-vinylpyrrolidone-2. La préparation des prépolymères à partir de polyimide, N-vinylpyrrolidone-2 et, éventuellement, de polyester insaturé est décrite dans le brevet belge 846.365.

Le prépolymère (A), défini ci-avant, présente de préférence un point de ramollissement compris entre 30 et 150 °C.

Le second constituant (B) des compositions conformes à l'invention est une résine époxy. L'expression « résine époxy » est utilisée présentement dans son sens habituel, c'est-à-dire qu'elle désigne une molécule renfermant plus d'un groupement

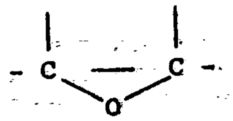

susceptible d'être réticulé. Toutes les résines époxy usuelles peuvent être utilisées. Parmi celles-ci on peut citer par exemple les éthers glycidiques obtenus en faisant réagir, de façon connue, avec de l'épichlorhydrine, des polyols tels que le glycérol, le triméthylolpropane, le butanediol ou le pentaérythritol. D'autres résines époxy appropriées sont les éthers glycidiques de phénols tels que le bis(hydroxy-4 phényl)-2,2 propane, le bis(hydroxyphényl) méthane, le résorcinol, l'hydroquinone, le pyrocatéchol, le phloroglucinol, le dihydroxy-4,4' diphényle et les produits de condensation du type phénol/aldéhydes. On peut utiliser les produits de réaction de l'épichlorhydrine avec des amines primaires ou secondaires telles que le bis(méthylamino-4 phényl) méthane ou le bis (amino-4 phényl) sulfone ainsi que des polyépoxydes aliphatiques ou alicycliques provenant de l'époxydation, au moyen de peracides ou d'hydroperoxydes, des dérivés insaturés correspondants. Ces différents types de résines époxy sont maintenant bien décrits dans la littérature et, en ce qui concerne leur préparation, on peut par exemple se reporter à l'ouvrage de Houben-Weil, volume 14/2 page 462.

Les proportions des constituants A et B peuvent varier dans de larges limites en fonction des propriétés désirées pour chaque cas particulier. C'est ainsi que le poids du prépolymère A peut représenter 5 à 95 %, et avantageusement 20 à 80 %, du poids du mélange global (prépolymère + résine époxy).

Les compositions conformes à l'invention sont préparées par simple mélange des constituants. Le mélange de la résine et du prépolymère est chauffé à une température de l'ordre de 50-120 °C jusqu'à l'obtention d'un mélange homogène. Les compositions peuvent être ensuite durcies à des températures de 120 °C à 280 °C et de préférence 150 °C à 200 °C. En tant que durcisseur (C) on utilisera des durcisseurs acides ou basiques de type usuel connus dans la technologie des résines époxy, tels que les bases de Lewis, les amines primaires, secondaires ou tertiaires aliphatiques ou aromatiques, les acides de Lewis, les anhydrides carboxyliques.

Conformément à une modalité particulière on peut préparer le prépolymère au sein de la résine époxy en chauffant le mélange de résine époxy avec le bis-imide et la N-vinylpyrrolidone-2, éventuellement le polyester insaturé, à une température située dans l'intervalle 50-130 °C.

Les compositions peuvent être mises en œuvre pour des opérations de moulage ou d'imprégnation. Elles peuvent être utilisées pour la réalisation de revêtements, de collages, de mousses, de stratifiés et matériaux composites renforcés. Le matériau de renforcement peut être sous forme pulvérulente, sous forme de nappes tissées ou non tissées, d'éléments unidirectionnels ou de fibres coupées naturelles ou synthétiques tels que les filaments et fibres de verre, de bore, de carbone, de tungstène, de silicium, de polyamide-imides ou polyamides aromatiques. Les compositions présentent un intérêt tout particulier pour l'obtention d'articles intermédiaires préimprégnés sans solvant. L'imprégnation du matériau fibreux peut être effectuée par application des techniques usuelles telles que l'immersion ou l'imprégnation par transfert. Le film transférable et les articles préimprégnés peuvent être utilisés directement ou bien être emmagasinés en vue d'un emploi ultérieur ; ils conservent remarquablement leurs propriétés au cours du stockage à température ambiante. Les matériaux composites résultant après mise en forme et durcissement présentent des performances mécaniques intéressantes, tout particulièrement en ce qui concerne les résistances en flexion et au cisaillement à température élevée. Du fait de ces propriétés les compositions conformes à l'invention conviennent particulièrement pour la réalisation de pièces utilisées dans l'industrie aéronautique.

Les exemples suivants illustrent l'invention.

## Exemple 1

On prépare un prépolymère en mélangeant à 120 °C 75 parties (en poids) de N,N'-4,4' diphénylméthane bis-maléimide, 12,5 parties de N-vinylpyrrolidone-2 et 12,5 parties d'une solution composée de 40 % en poids de phtalate d'allyle et 60 % d'un polyester insaturé de masse moléculaire 2 000, obtenu à partir d'acide maléique, de propylène et d'éthylène glycol. Le mélange est placé durant 30 minutes en étuve à 140 °C pour obtenir un produit dont le point de ramollissement est de 70 °C.

On mélange à 90 °C :

— 100 g de résine époxy au bisphénol A commercialisée sous l'appellation « Cy 205 »

— 100 g du prépolymère ci-dessus préparé.

On ajoute 3 g de durcisseur $BF_3$/monoéthylamine (HT 973).

Le mélange homogène est débullé sous vide à 90 °C. Le temps de gélification à 180 °C est de 8 minutes.

A l'aide de la composition ci-dessus on prépare un stratifié. On dépose, par enduction à la râcle, à raison de 200 g/m², la composition sur un papier siliconé. Le film possède un bon collant à température ambiante et ne présente aucune lacune. Cette pellicule sert à imprégner une nappe de fibres de carbone unidirectionnelles (AXT 10 000 de SEROFIM) à la température de 70 °C sous une pression de 0,5 bar pendant 30 secondes. L'air retenu par la fibre de carbone est ensuite éliminé par passage sous vide à 70 °C pendant 15 minutes.

10 plis de cette nappe de graphite préimprégnée sont empilés dans un moule préchauffé à 80 °C. Le moule est fermé progressivement pour chasser l'excès de résine, la pression atteignant 5 bars en fin de fermeture. Le stratifié réticulable contient 100 g de résine pour 100 g de fibres. On soumet l'ensemble à un traitement thermique durant 1 heure à 140 °C, puis 1 heure à 180 °C et 5 heures à 200 °C.

Les propriétés du matériau composite sont les suivants :

| | |
|---|---|
| — Densité 1,53 | |
| — Résistance en flexion (norme ASTM D 790) | (en Pa) |
| à 20 °C | $127{,}5.10^7$ |
| — Module de flexion (norme ASTM D 790) | |
| à 20 °C | $8\,924.10^7$ |
| — Rupture au cisaillement | |
| à 20 °C | $6{,}57.10^7$ |
| à 150 °C | $3{,}92.10^7$ |

(les essais de cisaillement ont été effectués avec une distance entre appuis de 10 millimètres, une vitesse de traverse de 1 millimètre par minute avec des éprouvettes 12 × 2 mm).

## Exemple 2

On prépare un matériau composite selon la technique décrite à l'exemple 1.

On utilise la composition suivante :

| | |
|---|---|
| — Résine époxy novolaque (DEN 431) | 58 g |
| — Prépolymère (exemple 1) | 42 g |
| — Durcisseur HT 973 | 1,5 g |

Le temps de gélification de cette composition est de 24 minutes à 150 °C. On imprègne les fibres de carbone par transfert de film et on forme un stratifié en empilant 10 plis préimprégnés dans un moule froid. L'ensemble est porté à 130 °C. On ferme ensuite le moule, la pression passant progressivement de 0,2 à 5 bars en fin de fermeture. Le stratifié contient 60 % de résine en volume. L'ensemble est enfin chauffé une heure à 150 °C, 3 heures à 180 °C et 20 heures à 200 °C. Les propriétés du matériau composite sont les suivantes :

| | (en Pa) |
|---|---|
| — Résistance en flexion | |
| à 20 °C | $140.10^7$ |
| à 120 °C | $117{,}68.10^7$ |
| — Module de flexion | |
| à 20 °C | $10\,150.10^7$ |
| à 120 °C | $9\,512.10^7$ |
| — Rupture au cisaillement | |
| à 20 °C | $7{,}84.10^7$ |
| à 180 °C | $3{,}33.10^7$ |

Exemple 3

Dans un réacteur muni d'un agitateur et placé dans un bain thermostaté à 110 °C on introduit 10 g du prépolymère décrit à l'exemple 1 et 90 g de résine époxy qui est un éther polyglycidique de novolaque phénol-formaldéhyde ayant un poids d'équivalent époxy d'environ 175. Le mélange est fondu et agité quelques minutes jusqu'à obtention d'une solution homogène. On ajoute alors 2,7 g de durcisseur BF3/amine HT 973. On agite 5 minutes puis on dégaze la solution en mettant le réacteur sous vide pendant 2 minutes. La résine est coulée dans un moule rectangulaire (120 × 200 × 13 mm). On porte l'ensemble 2 heures à 110 °C puis 20 heures à 200 °C.

Les propriétés de l'objet moulé sont rassemblées dans le tableau. On mesure la résistance en flexion initiale (Rf) et le module de flexion initial (Mf) à 20 °C et à 120 °C.

Exemple 4

On répète l'opération décrite à l'exemple 3 mais en utilisant un mélange de 90 g du même prépolymère imide, 10 g de la même résine époxy, et 0,35 g de durcisseur. L'objet moulé est cuit 2 heures à 150 °C puis 20 heures à 200 °C.

Les propriétés de l'objet moulé sont rassemblées dans le tableau.

Exemple 5

On répète l'opération décrite à l'exemple 3 en utilisant 42 g du même prépolymère imide, 58 g de la même résine époxy et 1,75 g de durcisseur.

Les propriétés de l'objet moulé préparé dans les conditions décrites à l'exemple 4 sont rassemblées dans le tableau.

Exemple 6

On prépare un prépolymère en mélangeant à 120 °C 80 parties (en poids) de N-N', 4-4' diphénylméthane bis-maléimide et 20 parties de N-vinylpyrrolidone-2. Après agitation durant 30 minutes à cette température on obtient un prépolymère dont la viscosité fondue est de 200 mPa · s à 110 °C.

On répète l'exemple 3 en utilisant 10 g du prépolymère ci-dessus préparé et 90 g de la même résine époxy novolaque puis après homogénéisation on ajoute 2,7 g de durcisseur BF3/amine HT 973.

Les propriétés de l'objet moulé préparé dans les conditions décrites à l'exemple 3 sont rassemblées dans le tableau.

Exemple 7

On répète l'exemple 3 en utilisant 90 g du prépolymère décrit à l'exemple 6, 10 g de la même résine époxy et 0,35 g de durcisseur HT 973.

Les propriétés de l'objet moulé préparé dans les conditions de l'exemple 4 sont rassemblées dans le tableau.

(Voir Tableau, p. 6)

Tableau

| Propriétés | Ex. 3 | Ex. 4 | Ex. 5 | Ex. 6 | Ex. 7 |
|---|---|---|---|---|---|
| Rf<br>(en Pa.$10^7$)<br>— à 20 °C<br>— à 120 °C | <br><br>(8,33)<br>(5,59) | <br><br>(6,8)<br>(5,19) | <br><br>(9,41)<br>(6,66) | <br><br>(8,23)<br>(5,88) | <br><br>(8,63)<br>(5,88) |
| Mf<br>(en Pa.$10^7$)<br>— à 20 °C<br>— à 120 °C | <br><br>(283,4)<br>(171,6) | <br><br>(399)<br>(220,6) | <br><br>(331,4)<br>(176,5) | <br><br>(304)<br>(166,7) | <br><br>(343,2)<br>(213,8) |

**Revendications**

1. Compositions thermodurcissables caractérisées en ce qu'elles comprennent :
A. un prépolymère obtenu par réaction de
a) un polyimide de formule :

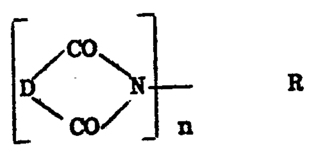

dans laquelle D représente ·

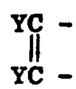

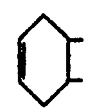

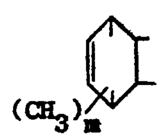

où Y représente H, $CH_3$, ou Cl et m est égal à 0, 1 ou 2, R représente un radical organique de valence n, renfermant de 2 à 50 atomes de carbone, et n représente un nombre dont la valeur moyenne est comprise entre 2 et 5 ;

b) la N-vinylpyrrolidone-2 ;

c) éventuellement un polyester insaturé, le rapport entre les doubles liaisons du polyimide a) et les groupements vinyliques de b) étant compris entre 1,01 et 10.

B. une résine époxy, et le cas échéant,

C. des durcisseurs pour résines époxy,

le poids du prépolymère A représentant 5 à 95 % du poids du mélange (prépolymère A + résine époxy B).

2. Compositions selon la revendication 1, dans lesquelles le poids du prépolymère A représente 20 à 80 % du poids du mélange (prépolymère A + résine époxy B).

3. Compositions selon la revendication 1 dans lesquelles le polyimide a) est le N,N'-4,4' diphénylméthane bis-maléimide.

4. Compositions selon la revendication 1 dans lesquelles le prépolymère est obtenu par réaction d'un polyimide, de N-vinylpyrrolidone-2 et d'un polyester insaturé en solution dans un monomère polymérisable.

5. Compositions selon l'une quelconque des revendications 1 à 4, caractérisées en ce qu'elles comprennent des charges renforçantes.

6. Compositions selon la revendication 5 sous forme de matériaux fibreux préimprégnés.

7. Objets moulés et articles composites obtenus après durcissement sous l'action de la chaleur des compositions selon l'une quelconque des revendications 1 à 6.

**Claims**

1. Thermosetting compositions, characterised in that they comprise :
A. a prepolymer obtained by reacting :
a) a polyimide of the formula :

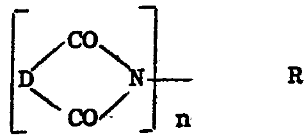

in which D represents

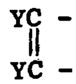 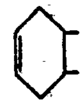 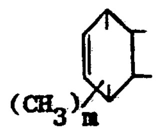

wherein Y represents H, $CH_3$ or C1 and m is equal to 0, 1 or 2, R represents an organic radical of valency n, having from 2 to 50 carbon atoms, and n is a number, the mean value of which is between 2 and 5 ;

b) N-vinyl-2-pyrrolidone ; and

c) if appropriate, an unsaturated polyester, the ratio between the double bonds of the polyimide a) and the vinyl groups of b) being between 1.01 and 10 ;

B. an epoxy resin ; and, if appropriate,

C. epoxy resin hardeners, the weight of the prepolymer A representing 5 to 95 % of the weight of the mixture (prepolymer A + epoxy resin B).

2. Compositions according to Claim 1, in which the weight of the prepolymer A represents 20 to 80 % of the weight of the mixture (prepolymer A + epoxy resin B).

3. Compositions according to Claim 1, which the polyimide a) is N,N'-4,4'-diphenylmethane-bismaleimide.

4. Compositions according to Claim 1, in which the prepolymer is obtained by reacting a polyimide, N-vinyl-2-pyrrolidone and an unsaturated polyester disolved in a polymerisable monomer.

5. Compositions according to any one of Claims 1 to 4, characterised in that they contain reinforcing fillers.

6. Compositions according to Claim 5, in the form of preimpregnated fibrous materials.

7. Moulded objects and composite articles obtained after hardening, by heating, of the compositions according to any one of Claims 1 to 6.

**Ansprüche**

1. Wärmehärtbare Massen, dadurch gekennzeichnet, daß sie bestehen aus :

A. einem Prepolymerisat erhalten durch Umsetzung von

a) einem Polyimid der Formel

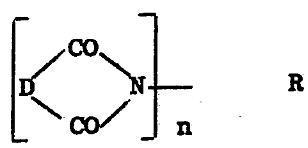

in der D für

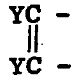 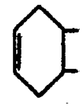 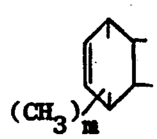

steht, wobei Y die Bedeutung H, $CH_3$ oder Cl hat und m 0, 1 oder 2 ist, R einen organischen Rest der Wertigkeit m bedeutet, der 2 bis 50 Kohlenstoffatome enthält und n eine Zahl ist, deren Mittelwert 2 bis 5 beträgt, mit

b) N-Vinylpyrrolidon-2 und

c) gegebenenfalls einem ungesättigten Polyester,

wobei das Verhältnis zwischen den Doppelbindungen des Polyimids a) und den Vinylgruppen von b) zwischen 1,01 und 10 liegt,

B. einem Epoxyharz und gegebenenfalls

C. Härtern für Epoxyharze,

wobei das Gewicht des Prepolymerisats A 5 bis 95 Gew.-% des Gemisches aus Prepolymerisat A und Epoxyharz B ausmacht.

2. Massen nach Anspruch 1, in denen das Gewicht des Prepolymerisats A 20 bis 80 Gew.-% des Gemisches aus Prepolymerisat A und Epoxyharz B ausmacht.

3. Massen nach Anspruch 1, in denen das Polyimid a) das N,N'-4,4'-Diphenylmethan-bis-maleinsäureimid ist.

4. Massen nach Anspruch 1, in denen das Prepolymerisat erhalten worden ist durch Umsetzung eines Polyimids mit N-Vinylpyrrolidon-2 und einem ungesättigten Polyester in Lösung in einer polymerisierbaren Monomeren.

5. Massen nach einem der vorangehenden Ansprüche 1 bis 4, dadurch gekennzeichnet, daß sie verstärkende Füllstoffe enthalten.

6. Massen nach Anspruch 5, in Form von vorimprägnierten Fasermaterialien.

7. Formteile und Verbunderzeugnisse erhalten nach Aushärten der Massen nach einem der Ansprüche 1 bis 6 unter der Einwirkung von Wärme.